# EUROPEAN PATENT SPECIFICATION

(11) **EP 1 876 484 B1**
(45) Date of publication and mention of the grant of the patent: **30.09.2015**
(21) Application number: 06022047.2
(22) Date of filing: 20.10.2006
(51) Int. Cl.: G02B 7/02

(54) **Lens frame, manufacturing method of the same, metal mold for molding the same, and lense positioning method**
Linsenfassung, Verfahren zu deren Herstellung, Metallform zum Formen derselben und Linsenpositionierungsverfahren
Cadre de lentille, procédé de fabrication de celui-ci, moule métallique pour mouler celui-ci et procédé de positionnement de lentille

(43) Date of publication of application: 09.01.2008
(73) Proprietor: Fujifilm Corporation, Minato-ku Tokyo 106-8620 (JP)
(72) Inventor: Watanabe, Seiichi, Kanagawa, 250-0001 (JP); Misonoo, Kazutoshi, Kanagawa, 250-0001 (JP)
(74) Representative: Klunker . Schmitt-Nilson . Hirsch

(56) References cited:
- JP-A- 62 002 219
- JP-A- 2003 337 270
- JP-A- 2006 284 789
- US-A- 4 812 015
- US-A- 6 088 160
- US-A- 6 108 146

## Description

### BACKGROUND OF THE INVENTION

### 1. Field of the Invention

The present invention relates to a manufacturing method of manufacturing a lens frame.

### 2. Description of the Related Art

As a lens frame for supporting an optical system in a device such as a film camera with a lens and a mobile phone with a camera, a small lens frame manufactured by plastic molding is widely used. The lens itself configuring the optical system is also manufactured by plastic injection molding. Because the accuracy of an optical axis in the optical system is essential for product quality, it is required to more accurately mold the lens frame and lens.

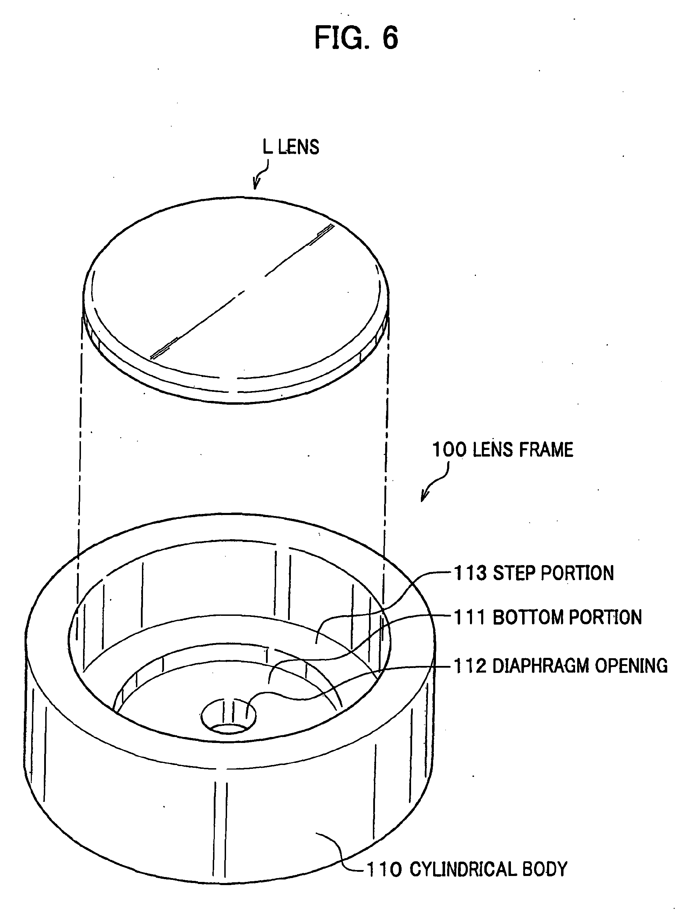

A conventional lens frame 100 such as shown in Fig. 6 comprises a sectional circular tubular body (cylindrical body 110), and is adapted to support an optical system by fitting a lens L in a hollow portion of the cylindrical body 100.

As an image-taking device comprising a lens frame and a lens is known one disclosed, for example, in Japanese Patent Application Laid-Open (Kokai) No. 2002-341218. Such an image-taking device comprises: a base plate; an image-taking element attached to the base plate; and an image-taking lens formed from a plastic material, including: a lens portion; a flange portion provided around the lens portion; and a supporting portion extending from the flange portion in a direction of an optical axis of the lens. Positioning of the lens portion in a direction orthogonal to the optical axis is performed by an outer circumference surface of the supporting portion provided on the flange portion closely to the optical axis.

However, the conventional lens frame 100 has a problem in that removal of the injection-molded lens frame 100 from the mold may cause the lens frame 100 to be deformed or distorted, thus preventing the lens L from being held in an accurate manner. That is, a concave deformation of a portion of the cylindrical body 110 causes the lens L to be held at a biased position in the hollow portion, resulting in a disparity between a central axis (optical axis) of the lens L and that of the lens frame 100.

In other words, a dimensional variation of the molded lens frame 100 prevents a central position of an optical part such as the lens L fitted therein from being determined. Also, variation in contraction amount of the lens frame 100 may in some cases result in some portions having dimensions smaller than expected, thereby applying an undesired stress to the lens L.

In addition, in the conventional image-taking device as described in the above-mentioned patent document, an accurate positioning of the lens requires use of a special lens having flange and support portions, which results in a complicated lens processing, a reduced lens accuracy, and an increased cost.

Further, there exists a problem that small sizing of the image-taking device is difficult because of the need to provide the lens with the flange and the support portions.

In view of the above-described problems, an object of the present invention is to provide a lens frame capable of accurately holding a lens, and more particularly, to provide a lens frame which eliminates variations in shape and dimensions of the lens frame due to the molding processing, accurately maintains the position of the lens, and eliminates an undesired stress from the lens.

Another object of the present invention is to provide a method for manufacturing the lens frame as well as a mold for molding the lens frame, appropriate for manufacturing the lens frame.

Still another object of the present invention is to provide a method for positioning a lens capable of accurately positioning an optical axis of the lens for the lens frame.

US-A-6,108,146 discloses a zoom assembly of a camera having plural lens groups. One of the lens groups comprises a lens frame having a cylindrical body. The cylindrical body has at least three ribs on an outer circumferential surface thereof (according to the preamble of claim 1). The three ribs are provided for being received between segments of an outer sleeve of a further lens group.

US-A-4,812,015 discloses a lens barrel in which three projecting fit portions are formed at the inner surface of a lens barrel.

JP 2003/337270 A discloses a lens holding frame formed by injection molding. The holding frame comprises three outer fringes on an outer circumferential surface and three protrusion portions on the corresponding inner circumferential surface for fixing the outer circle of a lens.

JP 62002219 discloses a lens barrel comprising three ribs or flange portions at the outer circumferential surface of a plastic molded lens frame. The three ribs induce local surface depressions in the lens frame so that the inner radius of the lens frame becomes larger at that portion.

JP2006284789 discloses a lens frame integrally formed with resin material.

### SUMMARY OF THE INVENTION

The present inventors et al. have devoted themselves to a study, and obtained following knowledge:
(1) Forming, by plastic injection molding, a cylindrical lens frame having ribs on an outer circumferential surface results in that, after removing the lens frame from the mold, each portion of the lens frame where each of the ribs is formed on an outer circumferential surface becomes smaller than the portion without the ribs, in terms of variation in dimensional change (contraction) amount on an inner circumferential surface due to disturbances in the molding process, such as small differences in resin and molding temperatures, pressure retaining ability, and cooling time. Therefore, supporting the lens at a portion having less variation in dimensional change amount allows accurate and stable positioning of the lens.
(2) Dimensional comparison of inside diameters of a molded lens frame shows that the portions where the ribs are formed on the outer circumferential surface become smaller in size than the portion without the ribs (the former having a lager contraction amount than the latter). This causes each inside portion of the ribs with less variation in dimensional change to contact the lens, thereby accurately and stably supporting the lens. At the same time, the portions where the ribs are not formed on the outer circumferential surface are spaced from the lens, and therefore an undesired stress can be prevented from applying to the lens.

In the lens frame made in accordance with the invention, the radius (r1) of the portions where the ribs are formed on the outer circumferential surface is smaller than the radius (r2) of the other portions, by 2 µm or more (r2 - r1 >= 2 µm). As a result, fitting the lens into the cylindrical body causes the former portions with smaller radius to contact the outer circumference of the lens, but the latter portions with larger radius do not. Because the number of the portions on the inner circumferential surface where the ribs are formed on the outer circumferential surface corresponds to that of the ribs, the lens position is uniquely determined by at least three positions on the inner circumferential surface of the cylindrical body. Also, because the portions of the inner circumferential surface where the ribs are not formed do not contact the lens, the lens is prevented from being located at a biased position. Further, compared to the portions where the ribs are not formed on the outer circumferential surface, the portions where the ribs are formed have a smaller fluctuation range of contraction rate due to a difference in molding conditions. Therefore, use of the latter portions to hold the lens allows accurate positioning of the lens.

The above-mentioned configuration also permits an accurate positioning of the lens axis simply by fitting the lens into the hollow portion of the cylindrical body, and thus eliminates the need for processing the lens into a special shape. This allows using a common type of lens with no special processing for positioning the lens, which leads to cost reduction and increased lens accuracy.

The difference between r1 and r2 (r2-r1) is defined as 2 µm or more because a radius difference smaller than 2 µm can increase a possibility that the portions where the ribs are not formed on the outer circumferential surface contact the lens, depending on a processing accuracy of a processing device (for example, 2 µm of circularity), generally used for processing a mold for molding a lens frame.

In addition, it is preferable to use three ribs, which surely uniquely define the lens position.

The invention provides a manufacturing method of a lens frame as defined by claim 1.

Using such a lens frame forming mold to mold a lens frame causes the portions of the cylindrical body where the ribs are formed on the outer circumferential surface to deform to have a smaller inside diameter than the other portions (where the ribs are not formed on the outer circumferential surface), when the molded lens frame is removed from the mold. Therefore, the other portions are prevented from contacting the lens. The portions of the inner circumferential surface where the ribs are formed on the outer circumferential surface have smaller variation than the other portions in terms of a dimensional change amount due to disturbances in the molding processing. Thus, such a mold for molding a lens frame can accurately and stably hold the lens, and therefore mold the lens frame that prevents an undesirable stress from applying to the lens.

In manufacturing such a mold, it is preferable to use a highly accurate machine tool (with a processing accuracy of ±0.1 µm) such as used for molding a lens, instead of a machining tool (with a processing accuracy of ±1 µm) commonly used for manufacturing such a mold.

When this method is used to mold a lens frame, it is preferable to use a molding material, such as a polycarbonate resin, which easily causes a difference in deformation amount between the portions where the ribs are formed on the outer circumferential surface and other portions.

Of the cavity surface for inner circumferential surface, a difference (r4 - r3) between a radius (r3) of portions facing the rib cavity surfaces and a radius (r4) of other portions is 2 µm or more.

According to this configuration, the cavity surface for the inner circumferential surface is formed such that the difference between the radius (r3) for the portion facing the surface of a rib cavity and the radius (r4) for the other portions is 2 µm or more (r4 - r3 >= 2 µm). Thus, use of such a mold to mold a lens frame positively allows the inner circumferential surface to have 2 µm or more of a difference in diameter between the portions where the ribs are formed on the outer circumferential surface and the other portions. Therefore, a lens frame molded with such a mold can highly accurately hold a lens.

Portions of the cavity surface for the inner circumferential surface, facing the surface of the rib cavity, are formed in a circularity of 2 µm or less. This allows an accurate positioning between the center axis of the cylindrical body and the center of the lens.

As mentioned above, the lens frame according to the invention can accurately hold the lens, and prevent an undesired stress from applying to the lens. This can eliminate the need for conducting a special processing for the lens, facilitate lens processing, and avoid deterioration of lens accuracy and a cost increase.

Further, the method for manufacturing the lens frame according to the invention can easily and accurately mold the lens frame as described above.

### BRIEF DESCRIPTION OF THE DRAWINGS

Fig. 1 is a perspective view showing a lens frame made by the method according to the invention.
Fig. 2A is a plan view of a lens frame,
Fig. 2B is a sectional view taken along the line A-A in Fig. 2A.
Fig. 3 is a sectional view showing a mold for molding a lens frame for use in a method for manufacturing a lens frame not covered by the claims.
Fig. 4 is a sectional view showing a mold for molding a lens frame according to an embodiment of the invention.
Fig. 5 is a radar graph showing a test result where circularity of an inside diameter of a lens frame is measured.
Fig. 6 is a perspective view showing a conventional lens frame.

### DESCRIPTION OF THE PREFERRED EMBODIMENTS

Referring to the drawings, a best mode for implementing the present invention will be described in detail. In the description, identical elements will be attached with a same reference numeral, while omitting an overlapping description. An embodiment will describe a case in which the invention is applied to manufacture a lens frame.

### [Lens Frame]

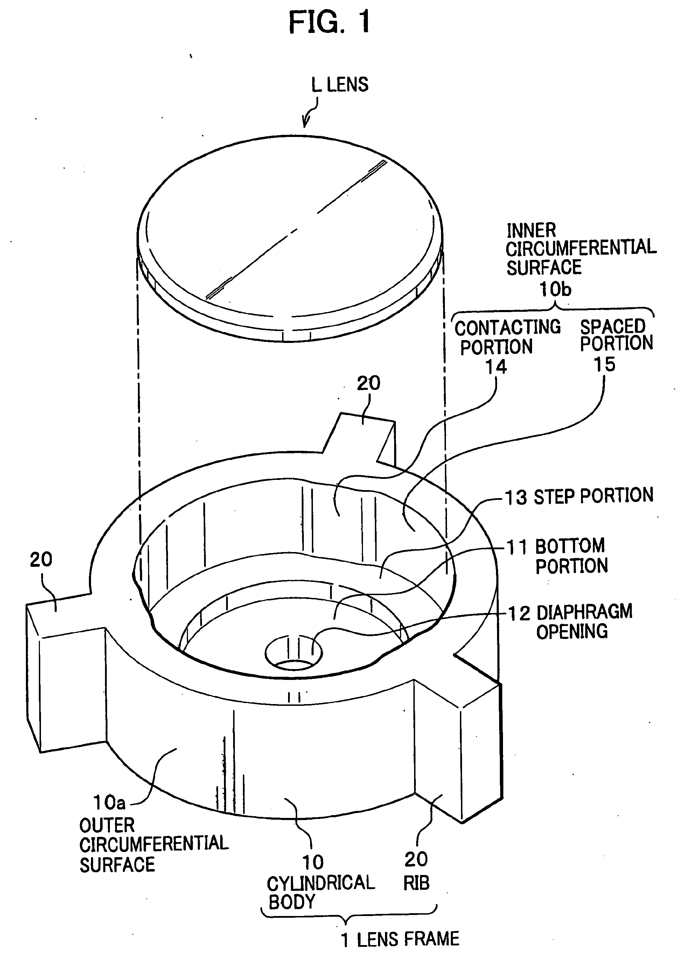

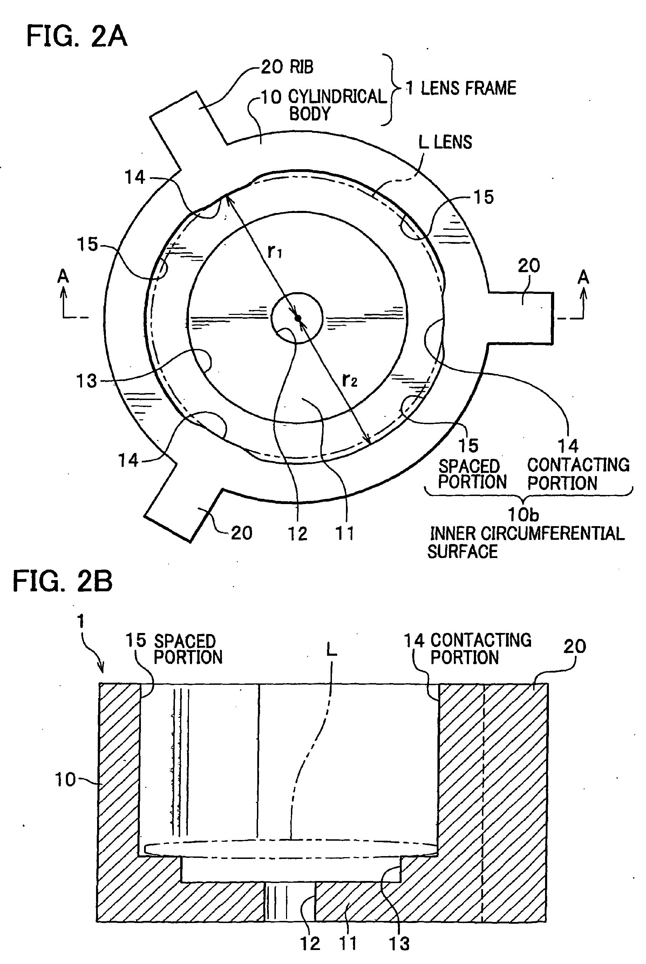

Fig. 1 is a perspective view showing a lens frame. Fig. 2A is a plan view of a lens frame. Fig. 2B is a sectional view taken along the line A-A shown in Fig. 2A.

Lens frame 1 is a member for supporting a lens L, and mainly comprises a cylindrical body 10, and three ribs 20 integrally formed on an outer circumference surface 10a of the cylindrical body 10, as shown in Fig. 1.

The cylindrical body 10 is a tubular body having a circular sectional shape, which is open at one end and has a bottom portion 11 at the other end. The bottom portion 11 configures a diaphragm in an optical system, having at a center thereof a diaphragm opening 12 concentric with the cylindrical body 10. The bottom portion 11 has along its peripheral rim a step portion 13 which is one step higher than a vicinity around the center of the bottom portion 11. The cylindrical body 10 has a hollow portion into which the lens L is fitted. The step portion 13 is used to position the lens L in an orthogonal axial direction of the cylindrical body 10.

As shown in Fig. 1, the ribs 20 each have a rectangular parallelepiped shape and are protrudingly provided on the outer circumferential surface 10a of the cylindrical body 10 at an interval of 120 degrees. When the lens frame 1 is attached to a mobile phone with a camera, for example, the ribs 20 play a role to fit with the mobile phone body for positioning of the lens frame 1.

As shown in Fig. 2A, the cylindrical body 10 has an internal circumference surface 10b which includes portions where the ribs 20 are formed on the outer circumferential surface (hereinafter referred to as "contacting portions 14"), and portions where the ribs 20 are not formed on the outer circumferential surface (hereinafter referred to as "spaced portions 15"). The spaced portions 15 and contacting portions 14 have radiuses r2 and r1, respectively, r2 being larger than r1 by about 2 µm. The radius r1 is defined to be identical with the radius of the lens L. Thus, fitting the lens L into the hollow portion of the cylindrical body 10 causes only the three contacting portions 14 corresponding to the three ribs 20 to contact the outer circumferential surface of the lens L, thereby leaving the spaced portions 15 being spaced from the outer circumferential surface of the lens, as shown in Fig. 2b.

A method of forming the contacting portions 14 and the spaced portions 15 on the inner circumferential surface 10b will be discussed in detail later on.

In this manner, the lens L is uniquely positioned and supported by the three contacting portions 14. In other words, the contacting portions 14 serve as means for positioning the lens L in a direction orthogonal to the axis of the cylindrical body 10.

The portions of the lens frame where the ribs 20 are formed on the outer circumferential surface 10a have an increased cross-sectional rigidity to deter such portions from being deformed, and thus it is possible to accurately position the lens L. In contrast, the spaced portions 15 with relatively smaller cross-sectional rigidity are not in contact with the lens L. Therefore, a small mount of deformation and a molding error of the portions do not affect the positioning accuracy of the lens L.

It should be noted that the shape of the lens frame 1 is not limited to that shown in Fig. 2, as long as the inner portions of the ribs 20 are provided as the contacting portion 14, and the other portions as the spaced portions 15. Also, steps between the contacting portions 14 and the spaced portion 15 may not be distinctly defined as in Fig. 2 but may be smoothly shaped.

### [Manufacturing Method of Lens Frame and Metal Mold for Molding Lens Frame Used for the Method]

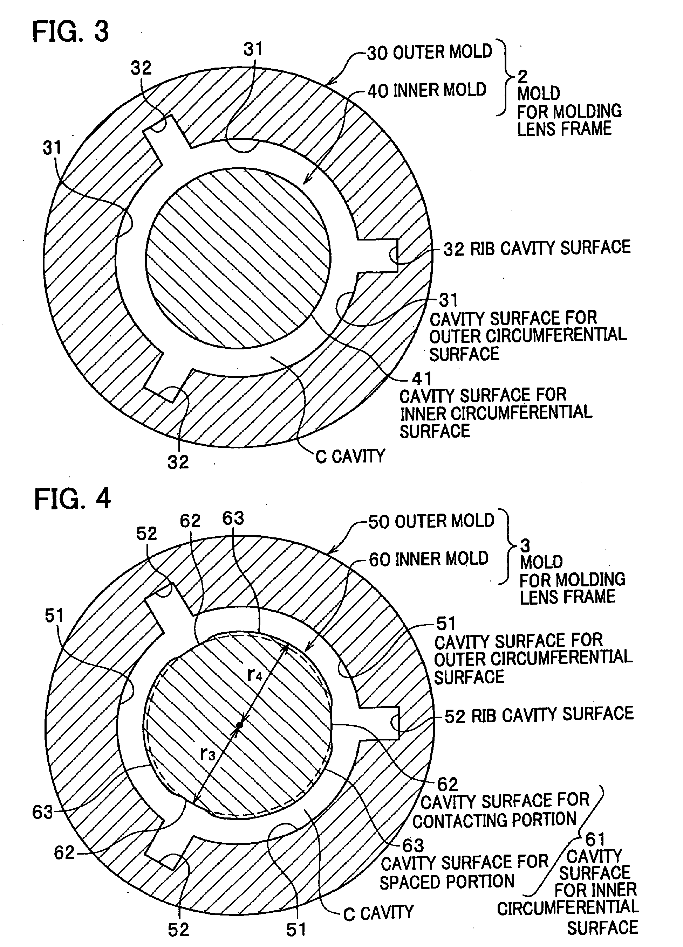

Fig. 3 is a sectional view showing a mold for molding a lens frame for use in a method for manufacturing a lens frame not covered by the claims. The method includes: (1) injecting a molding material into a cavity C of the mold 2 for molding a lens frame shown in Fig. 3; and (2) removing the molded lens frame from the cavity C.

First will be described the configuration of the mold 2 for molding a lens frame.

As shown in Fig. 3, the mold 2 mainly comprises: an outer mold 30 for forming an external shape of the lens frame 1; and an inner mold 40 for forming an internal shape thereof. Between the outer mold 30 and the inner mold 40 is formed the cavity C having a shape corresponding to the lens frame 1. The outer mold 30 and the inner mold 40 are also coaxially formed or disposed.

The inner mold 40 may be a member (an insert) separate from the outer mold 30. Alternatively, the inner mold 40 and the outer mold 30 may be configured as distinct members of a single member. Although the mold 2 for molding a lens frame also has a mold portion (not shown) with cavity surfaces corresponding to the bottom portion 11, the diaphragm opening 12, and the step portion 13, a detailed discussion thereof will be omitted.

As shown in Fig. 3, the outer mold 30 has an approximate

Released from the restraint of the cavity C, the removed lens frame 1 deforms to reduce its diameter by internal stress. At this time, the cylindrical body 10 has a difference in deformation amount between the portions where the ribs 20 are formed on the outer circumferential surface 10a and other portions. According to studies by the present inventors, the portions where the ribs 20 are formed on the outer circumferential surface 10a deform such that the inside diameter becomes smaller than the other portions. It is presumed that the difference in deformation amount is caused by difference in cross-sectional area and temperature.

In this manner, the lens frame 1 is formed, comprising the contacting portions 14 and the spaced portions 15 on the inner circumferential surface 10b of the cylindrical body 10.

The cavity surface 41 for an inner circumferential surface is formed to have a circularity of 2 µm or less, which can render identical in an accurate manner the distances between the three contacting portions 14 and the center of the lens frame 1. Accordingly, it is made possible to accurately match the central axis of the lens frame with respect to the center of the lens (optical axis), when the lens is fitted into the hollow portion of the cylindrical body 10.

When this method is employed to mold a lens frame, it is preferable to use a molding material that easily causes a difference in deformation amount between the portions where the ribs are formed on the outer circumferential surface and other portions, such as polycarbonate (PC), polymethyl methacrylate (PMMA), acrylonitrile-butadiene-styrene (ABS), polyoxymethylene (POM), and polystyrene (PS).

As shown in Fig. 4, the inner mold 60 is a columnar mold, placed in the outer mold 50 (hollow portion) separated by a predetermined distance therefrom. The inner mold 60 has an outer circumferential surface which is provided as a cavity surface 61 for an inner circumferential surface of the lens frame which corresponds in shape to the inner circumferential surface 10b of the lens frame 1. The cavity surface 61 includes: a cavity surface 62 corresponding to the contacting portion 14 of the lens frame 1; and a cavity surface 63 corresponding to the spaced portion 15. The cavity surface 62 for the contacting portion is formed at a position facing each of the rib cavity surfaces 52 provided to the outer mold 50. In the cross-sectional view of the inner mold 60, the three cavity surfaces 62 have a mutually identical radius r3, and the three cavity surfaces 63 have a mutually identical radius r4 (r3 < r4).

In the embodiment, the radius r3 has a dimension in light of a contraction rate of the lens frame 1 (a dimension such as obtained by multiplying the radius r1 of the contacting portion 14 by an inverse of the contraction rate of the molded product). The radius r4 likewise has a dimension in light of a contraction rate of the lens frame 1 (a dimension such as obtained by multiplying the radius r2 of the spaced portion 15 by the inverse of the contraction rate of the molded product). Because the radiuses r3 and r4 have a difference of about 2 µm (r4 - r3 = 2 µm), use of the mold 3 to mold the lens frame can surely provide a difference of about 2 µm between the contacting portion 14 and the spaced portion 15.

The mold 3 is preferable for molding the lens frame 1 using a molding material such as polycarbonate (PC), polymethyl methacrylate (PMMA), acrylonitrile-butadiene-styrene (ABS), polyoxymethylene (POM), and polystyrene (PS). Using these materials, even the mold 2 as shown in Fig. 3 can form the contacting portions 14 and the spaced portions 15 on the inner circumferential surface of the molded lens frame 1. By using the mold 3 as shown in Fig. 4, the contacting portions 14 and the spaced portions 15 can be more surely formed.

### [Lens Positioning Method]

When the lens L is fitted into the lens frame 1 according to the embodiment, the optical axis of the lens L is uniquely positioned by the contacting portions 14.

In other words, like the lens frame 1, by positioning the lens L at three positions, the position of the optical axis of the lens L is uniquely determined. Further, the portions for contacting the lens L (contacting portions 14) reinforced by the ribs 20 can reduce distortion in the portions, compared to the conventional cylindrical body 110 (Fig. 6).

In the case of the conventional lens frame 100 shown in Fig. 6, wherein the total inner circumferential surface of the cylindrical body 110 is used to position the lens L in the direction orthogonal to the optical axis thereof, distortion in the cylindrical body 110 may cause a disparity between the centers of the lens L and the cylindrical body 110.

The positioning method according to the present invention can thus position a lens more accurately than the conventional method.

### [Example]

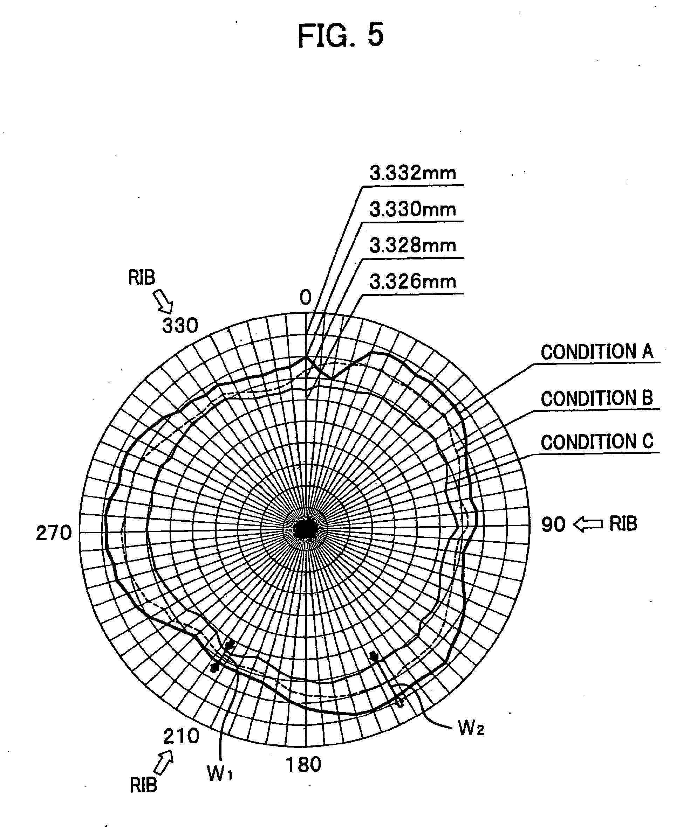

A polycarbonate resin (non-Bromine and non-phosphorus flame-retardant grade) was injected into the mold 2 having the inner mold 40 with a circularity of 1 µm, to form the lens frame 1. Then, circularity of the inner circumferential surface 10b of the lens frame 1 was measured (see Figs. 1 and 3), and results thereof are shown in Fig. 5. Molding conditions are shown in Table 1.

**[Table 1]**

| Molding Condition | Resin Temperature (°C) | Metal Mold Temperature (°C) | Pressure Retaining Force (kgf/cm²) | Cooldown Time (s) | Circularity of Metal Mold | Molding Material |
|---|---|---|---|---|---|---|
| A | 300 | 110 | 800 | 6.3 | 1 µm | Polycarbonate |
| B | 290 | 100 | 700 | 8.8 | 1 µm | Polycarbonate |
| C | 280 | 90 | 600 | 11.3 | 1 µm | Polycarbonate |

Fig. 5 is a radar graph showing a test result where circularity of an inside diameter of a lens frame is measured.

In the radar graph, scales in diametrical and circumferential directions are 2 µm and 5 degrees, respectively. In the embodiment, the ribs 20 of the lens frame 1 are provided approximately at 90, 210, and 330 degrees.

According to the test results shown in Fig. 5, in the vicinity of 90, 210, and 330 degrees, the molded lens frame 1 has an inside diameter with a fluctuation range W1 of about 2 µm, while the other portion has a fluctuation range W2 of about 4 µm. That is, compared to the portions where the ribs 20 are not formed on the outer circumferential surface 10a, the portions where the ribs 20 are formed thereon have a smaller fluctuation range of the inner diameter, having a contraction in the rage of 2 to 4 µm.

Although the best mode for implementing the present invention has been described in detail heretofore referring to the drawings, the present invention is not limited thereto but may be modified within the spirit and scope of the invention.

For example, although the three ribs 20 are provided in the above-discussed embodiment, no limitation is placed on the number of the ribs 20 and more than three ribs 20 may be formed.

Also, although the lens frame 1 is configured to hold a single lens L in the embodiment, the lens frame 1 may hold a plurality of lenses L. In this case, it is preferable to provide a plurality of step portions 13. In addition, the lens L may be disposed on both sides of the bottom portion 11.

Further, although each of the ribs 20 is formed in a rectangular parallelepiped shape in the embodiment, no limitation is placed on the shape and use of the ribs 20 as long as the cylindrical body 10 has a sufficient cross-sectional rigidity.

Still further, although the bottom portion 11 and the diaphragm opening 12 are provided at one end of the cylindrical body 10 in the embodiment, it goes without saying that these may be provided as needed.

## Claims

1. A manufacturing method of manufacturing a lens frame (1) comprising a cylindrical body (10) having at least three ribs (20) on an outer circumferential surface (10a) of the cylindrical body (10) wherein on the inner circumferential surface (10b) of the cylindrical body (10), a difference (r2 - r1) between an inner radius (r1) of contacting portions (14) where the ribs (20) are formed and a radius (r2) of spaced portions (15) of the inner circumferential surface (10b) is 2 µm or more,
wherein the ribs (20) are formed as wall shape along the axis of the cylindrical body (10), and
wherein the inner circumferential surface (10b) of the cylindrical body (10) has the contacting portions (14) for contacting with a lens and the spaced portions (15) for not contacting with the lens,
the method comprising:
preparing a mold (3) for molding the lens frame (1):
injecting a molding material into a cavity of the mold for molding the lens frame (1); and removing the molded lens frame from the cavity of the mold for molding the lens frame (1), wherein the mold includes:
an inner mold (60) having a cavity surface (61) for an inner circumferential surface (10b); and
an outer mold (50) placed around the inner mold (60), and comprising: cavity surfaces (51) for an outer circumferential surface corresponding to the outer circumferential surface (10a) of the cylindrical body (10); and rib cavity surfaces (52) respectively corresponding to the ribs (20),
wherein cavity surfaces (62) for the contacting portions of the inner mold (60) for the cylindrical body (10) are formed as concave portions on a circumference at a distance of a radius of r3 from a central axis of the inner mold (60) in order that the contacting portions (14) are formed as convex projections on the inner circumferential surface (10b) of the cylindrical body (10) of the lens frame (1) so that the ribs (20) are respectively arranged at the corresponding positions on the outer circumferential surface (10a) of the cylindrical body (10) of the lens frame (1),
wherein cavity surfaces (63) for the spaced portions of the inner mold (60) are formed as convex portions on a circumference at a distance of a radius of r4 from a central axis of the inner mold (60) in order that the spaced portions (15) are formed as concave portions on the Inner circumferential surface (10b) of the cylindrical body (10) of the lens frame (1) so that the ribs (20) are not arranged at the corresponding positions on the outer circumferential surface of the cylindrical body (10) of the lens frame (1),
wherein the cavity surfaces (62) for contacting portions of the inner mold (60) are apart from the central axis of the inner mold (60) by a radius of r3, and the cavity surfaces (63) for the spaced portions of the inner mold (60) are apart from the central axis of the inner mold (60) by a radius of r4, and the difference of the radiuses is represented as a formula (r4 - r3)>=2 µm,
and
wherein the rib cavity surface (52) for the ribs (20) are formed as a groove shape along the central axis of the outer mold (50).

2. The manufacturing method as claimed in Claim 1, wherein the ribs (20) are three ribs disposed at an interval of 120 degrees on the outer circumferential surface (10a) of the cylindrical body (10); and the rib cavity surfaces (52) of the outer mold (50) are three cavity surfaces for preparing the ribs (20) of the cylindrical body (10).

3. The manufacturing method as claimed in Claim 1, wherein the method uses in the injection at least one material selected from a group of materials including polycarbonate, polymethyl methacrylate, acrylonitrile butadiene styrene, polyoxymethylene, and polystyrene.

4. The manufacturing method as claimed in Claim 1, wherein the ribs have a rectangular parallelepiped shape extending in a direction parallel to an axis of the cylindrical body (10).

5. The manufacturing method as claimed in Claim 1, wherein the process of preparing the mold for molding a lens frame comprises using a machine tool with a processing accuracy of +0.1 µm and manufacturing the mold for molding a lens frame.

## Patentansprüche

1. Fertigungsverfahren zum Fertigen einer Linsenfassung (1), die einen zylindrischen Körper (10) mit mindestens drei Rippen (20) auf der Außenumfangsfläche (10a) des zylindrischen Körpers (10) aufweist, wobei auf der Innenumfangsfläche (10b) des zylindrischen Körpers (10) eine Differenz (r2 - r1) zwischen einem In-nenradius (r1) von Berührabschnitten (14), wo die Rippen (20) gebildet sind, und einem Radius (r2) von beabstandeten Bereichen (15) der Innenumfangsfläche (10b) 2 µm oder mehr beträgt,
wobei die Rippen (20) als Wandform entlang der Achse des zylindrischen Körpers (10) gebildet sind, und
wobei die Innenumfangsfläche (10b) des zylindrischen Körpers (10) die Berührabschnitte (14) zur Berührung mit einer Linse und die beabstandeten Bereiche (15) zum Nicht-Berühren der Linse besitzt,
wobei das Verfahren aufweist:
Bereitstellen einer Form (3) zum Formen der Linsenfassung (1);
Einspritzen eines Formmaterials in einen Formhohlraum zum Formen der Linsenfassung (1); und
Entnehmen der geformten Linsenfassung aus dem Formhohlraum zum Formen der Linsenfassung (1), wobei die Form enthält:
eine Innenform (60) mit einer Formhohlraumfläche (61) für die Innenumfangsfläche (10b); und
eine Außenform (50), die um die Innenform (60) herum mit Abstand angeordnet ist und aufweist: Formhohlraumflächen (51) für die Außenumfangsfläche entsprechend der Außenumfangsfläche (10a) des zylindrischen Körpers (10); und Rippen-Formhohlraumflächen (52) entsprechend den Rippen (20),
wobei die Formhohlraumflächen (62) für die Berührabschnitte der Innenform (60) für den zylindrischen Körper (10) als konkave Bereiche an einem Umfang in einem Abstand mit einem Radius r3 von einer Mittelachse der Innenform (60) gebildet sind, damit die Berührabschnitte (14) als konvexe Vorsprünge an der Innenumfangsfläche (10b) des zylindrischen Körpers (10) der Linsenfassung (1) geformt werden, so dass die Rippen (20) an den entsprechenden Stellen an der Außenumfangsfläche (10a) des zylindrischen Körpers (10) der Linsenfassung (1) angeordnet sind,
wobei die Formhohlraumflächen (63) für die beabstandeten Bereiche der Innenform (60) als konvexe Bereiche an einem Umfang in einem Abstand mit einem Radius von r4 von der Mittelachse der Innenform (60) gebildet sind, damit die beabstandeten Bereiche (15) als konkave Bereiche an der Innenumfangsfläche (10b) des zylindrischen Körpers (10) der Linsenfassung (1) gebildet werden, damit die Rippen (20) nicht an den entsprechenden Stellen an der Außenumfangsfläche des zylindrischen Körpers (10) der Linsenfassung (1) angeordnet sind,
wobei die Formhohlraumfläche (62) für Berührabschnitte der Innenform (60) abgesetzt sind von der Mittelachse der Innenform (60) durch einen Radius r3, und die Formhohlraumflächen (63) für die beabstandeten Bereiche der Innenform (60) gegenüber der Mittelachse der Innenform (60) um einen Radius r4 beabstandet sind, und die Differenz der Radien durch die Formel (r4 - r3) >= 2 µm dargestellt wird, und
wobei die Rippen-Formhohlraumflächen (52) für die Rippen (20) als Nutenform entlang der Mittelachse der Außenform (50) gebildet sind.

2. Fertigungsverfahren nach Anspruch 1, bei dem die Rippen (20) drei Rippen sind, angeordnet in einem Abstand von 120 Grad an der Außenumfangsfläche (10a) des zylindrischen Körpers (10), und die Rippenformhohlraumflächen (52) der Außenform (50) drei Formhohlraumflächen sind zur Bildung der Rippen (20) an dem zylindrischen Körper (10).

3. Fertigungsverfahren nach Anspruch 1, bei dem das Verfahren Gebrauch macht von dem Einspritzen mindestens eines Materials aus der Gruppe Polycarbonat, Polymethylmethacrylat, Acrylonitril-Butadienstyrol, Polyoxymethylen und Polystyrol.

4. Fertigungsverfahren nach Anspruch 1, bei dem die Rippen die Form eines rechtwinkligen Parallelepipeds haben, die sich in einer Richtung parallel zu einer Achse des zylindrischen Körpers (10) erstreckt.

5. Fertigungsverfahren nach Anspruch 1, bei dem der Vorgang des Vorbereitens der Form zum Formen einer Linsenfassung eine Werkzeugmaschine mit einer Bearbeitungsgenauigkeit von +0,1 µm und zum Fertigen der Form zum Formen einer Linsenfassung aufweist.

## Revendications

1. Procédé de fabrication pour fabriquer un cadre de lentille (1) comprenant un corps cylindrique (10) présentant au moins trois nervures (20) sur une surface circonférentielle extérieure (10a) du corps cylindrique (10), dans lequel sur la surface circonférentielle intérieure (10b) du corps cylindrique (10), une différence (r2-r1) entre un rayon intérieur (r1) de parties de contact (14), où les nervures (20) sont formées et un rayon (r2) de parties espacées (15) de la surface circonférentielle intérieure (10b) est de 2 µm ou davantage,
dans lequel les nervures (20) sont façonnées en forme de paroi le long de l'axe du corps cylindrique (10), et
dans lequel la surface circonférentielle intérieure (10b) du corps cylindrique (10) présente les parties de contact (14) en vue d'un contact avec une lentille et les parties espacées (15) pour une absence de contact avec la lentille,
le procédé comprenant :
la préparation d'un moule (3) destiné à mouler le cadre de lentille (1) ;
l'injection d'un matériau de moulage dans une cavité du moule pour mouler le cadre de lentille (1), et
le retrait du cadre de lentille moulé de la cavité du moule pour mouler le cadre de lentille (1),
dans lequel le moule inclut :
un moule intérieur (60) présentant une surface de cavité (61) pour une surface circonférentielle intérieure (10b), et
un moule extérieur (50) placé autour du moule intérieur (60), et comprenant : des surfaces de cavité (51) pour une surface circonférentielle extérieure correspondant à la surface circonférentielle extérieure (10a) du corps cylindrique (10), et des surfaces de cavité de nervure (52) correspondant respectivement aux nervures (20) ;
dans lequel les surfaces de cavité (62) pour les parties de contact du moule intérieur (60) pour le corps cylindrique (10) sont façonnées comme des parties concaves sur une circonférence à une distance d'un rayon de r3 à partir d'un axe central du moule intérieur (60), afin que les parties de contact (14) soient façonnées comme des saillies convexes sur la surface circonférentielle intérieure (10b) du corps cylindrique (10) du cadre de lentille (1), de manière à ce que les nervures (20) soient respectivement agencées en des positions correspondantes sur la surface circonférentielle extérieure (10a) du corps cylindrique (10) du cadre de lentille (1) ;
dans lequel les surfaces de cavité (63) pour les parties espacées du moule intérieur (60) sont façonnées en parties convexes sur une circonférence à une distance d'un rayon de r4 à partir d'un axe central du moule intérieur (60) afin que les parties espacées (15) soient façonnées comme des parties concaves sur la surface circonférentielle intérieure (10b) du corps cylindrique (10) du cadre de lentille (1), de manière à ce que les nervures (20) ne soient pas agencées en les positions correspondantes sur la surface circonférentielle extérieure du corps cylindrique (10) du cadre de lentille (1) ;
dans lequel les surfaces de cavité (62) pour les parties de contact du moule intérieur (60) sont séparées de l'axe central du moule intérieur (60) à raison d'un rayon de r3, et les surfaces de cavité (63) pour les parties espacées du moule intérieur (60) sont séparées de l'axe central du moule intérieur (60) à raison d'un rayon de r4, et la différence des rayons est représentée à l'aide de la formule : (r4-r3)>=2 µm, et
dans lequel la surface de cavité de nervure (52) pour les nervures (20) est façonnée en forme de rainure le long de l'axe central du moule extérieur (50).

2. Procédé de fabrication selon la revendication 1, dans lequel les nervures (20) sont les trois nervures disposées à un intervalle de 120 degrés sur la surface circonférentielle extérieure (10a) du corps cylindrique (10), et les surfaces de cavité de nervure (52) du moule extérieur (50) sont trois surfaces de cavité pour préparer les nervures (20) du corps cylindrique (10).

3. Procédé de fabrication selon la revendication 1, dans lequel lors de l'injection, le procédé utilise au moins un matériau sélectionné parmi un groupe de matériaux incluant le polycarbonate, le méthacrylate de polyméthyle, l'acrylonitrile-butadiène-styrène, le polyoxyméthylène, et le polystyrène.

4. Procédé de fabrication selon la revendication 1, dans lequel les nervures présentent une forme de parallélépipède rectangle s'étendant dans une direction parallèle à un axe du corps cylindrique (10).

5. Procédé de fabrication selon la revendication 1, dans lequel le processus de préparation du moule pour mouler un cadre de lentille comprend l'utilisation d'une machine-outil avec une précision de traitement de +0,1 µm et la fabrication du moule pour mouler un cadre de lentille.
